# FASCICULE DE BREVET EUROPEEN

(11) **EP 2 637 880 B1**
(45) Date de publication et mention de la délivrance du brevet: **23.07.2014**
(21) Numéro de dépôt: 11779446.1
(22) Date de dépôt: 09.11.2011
(51) Int. Cl.: B60H 1/00, B60H 1/22, H05B 1/00, H05B 1/02

(54) **DISPOSITIF ET PROCÉDÉ DE COMMANDE D'UN RADIATEUR ÉLECTRIQUE D'UN SYSTÈME DE VENTILATION, CHAUFFAGE ET/OU CLIMATISATION AUTOMOBILE**
VORRICHTUNG UND VERFAHREN ZUR STEUERUNG EINES ELEKTRISCHEN RADIATORS EINER BELÜFTUNGS-, HEIZUNGS- UND/ODER KLIMAANLAGE EINES FAHRZEUGES
DEVICE AND METHOD FOR CONTROLLING AN ELECTRIC RADIATOR OF AN AUTOMOTIVE VENTILATING, HEATING AND/OR AIR-CONDITIONING SYSTEM

(30) Priorité: 09.11.2010 FR 1004378
(43) Date de publication de la demande: 18.09.2013
(73) Titulaire: Valeo Systemes Thermiques, 78321 Le Mesnil Saint Denis (FR)
(72) Inventeur: PUZENAT, Bertrand, 78180 Montigny Le Bretonneux (FR); DE SOUZA, Stéphane, 78220 Velizy (FR)
(74) Mandataire: Fauré, Marion-Laurie
(86) Numéro de dépôt international: PCT/EP2011/069709
(87) Numéro de publication internationale: WO 2012/062788

(56) Documents cités:
- EP-A1- 1 932 699
- WO-A2-2004/108446
- DE-A1-102008 056 757

## Description

### Arrière-plan de l'invention

La présente invention se rapporte au domaine général des dispositifs de commande de radiateurs électriques installés dans un système de ventilation, chauffage et/ou climatisation utilisé dans le secteur automobile.

De tels radiateurs électriques sont installés dans les systèmes de ventilation, chauffage et/ou climatisation du secteur automobile pour assurer le chauffage rapide de l'habitacle en début de fonctionnement du véhicule à moteur thermique et avant que la thermique du moteur lui-même n'assure un tel chauffage. Pour un véhicule électrique, de tels radiateurs électriques assurent le chauffage principal de l'habitacle, en combinaison ou non avec une pompe à chaleur.

L'invention s'applique à la conception générale de tels radiateurs électriques et de la commande de ceux-ci.

Un dispositif de commande d'un type connu est divulgué par le document DE 10 2008 056757 A1, qui constitue l'art antérieur le plus proche.

Classiquement, le dispositif de commande de radiateur électrique comprend au moins deux modules électroniques incluant chacun un calculateur. Un premier module, dit de commande, est apte à envoyer des commandes de fonctionnement vers le radiateur électrique et un second module, dit de gestion, implémenté au sein du radiateur électrique, est apte à gérer le fonctionnement du radiateur électrique en fonction des commandes reçues en provenance du module de commande.

Pour commander le radiateur électrique, il est donc nécessaire que le module de commande puisse envoyer vers un module de gestion des signaux de commande pour contrôler le fonctionnement du radiateur électrique. Typiquement, le module de commande envoie au calculateur du module de gestion du radiateur électrique une puissance de fonctionnement requise.

En parallèle, il est tout aussi nécessaire, dans un système de ventilation, chauffage et/ou climatisation automobile, que le radiateur électrique puisse retourner vers le module de commande des éléments diagnostiques relatifs à son fonctionnement.

En particulier, classiquement, le radiateur électrique pourra avoir besoin de donner un retour au module de commande au sujet de la présence d'éventuels courts-circuits, de la présence d'une sous-alimentation électrique ou d'un survoltage sur son alimentation. Il peut aussi, avantageusement, avoir besoin d'envoyer une information sur la présence d'une surchauffe ou d'un dépassement d'une température donnée.

Actuellement, entre les calculateurs de tels modules, il est connu d'utiliser un bus du type LIN ou CAN qui autorise les communications bidirectionnelles entre une pluralité de calculateurs. Cependant, cela s'avère être une solution coûteuse. Si aucune autre utilisation du bus n'est envisagée, un tel cout n'est pas justifié.

D'autres systèmes de communication entre deux calculateurs, utilisés dans de tels modules, utilisent deux fils de communication, un dans le sens du module de commande vers le module de gestion et un autre du module de gestion vers le module de commande. Les deux modules peuvent ainsi dialoguer entre eux.

Cette dernière réalisation implique l'installation de deux fils de communication, ce qui complexifie la construction et augmente le coût par rapport à l'installation d'une communication monodirectionnelle.

### Objet et résumé de l'invention

La présente invention a donc pour but principal de pallier les inconvénients des modes de communication bidirectionnels existants et, plus particulièrement, de réduire le coût d'implémentation et la simplicité de fonctionnement du mode de communication bidirectionnel en proposant que le module de commande comprenne une unité de génération et d'émission d'un signal PWM représentatif des commandes de fonctionnement à envoyer au radiateur sur un unique fil de communication relié au module de gestion et une unité de lecture du signal circulant sur le fil de communication.

L'invention propose, en même temps, que le module de gestion comprenne, quant à lui, une unité d'altération du signal PWM circulant sur l'unique fil de communication en fonction d'événements détectés dans le fonctionnement du radiateur.

En proposant une telle structure au sein des modules de commande et de gestion eux-mêmes, l'invention permet d'utiliser un seul fil de communication sur lequel circule un signal PWM comprenant deux informations. Cela permet de faire circuler une information dans chacune des deux directions entre le module de commande et le module de gestion. En effet, l'implémentation d'une unité de lecture du signal PWM circulant sur le fil de communication dans le module de commande permet que le module de commande soit informé d'une altération du signal PWM dont il génère l'émission sur le fil de communication. L'altération est générée au sein du module de gestion qui comprend pour cela des éléments lui permettant de modifier ce signal d'une manière différente pour chacun des évènements susceptibles d'être détectés dans le fonctionnement du radiateur.

En altérant le signal PWM circulant sur le fil de communication de manière différente en fonction de ces évènements, le module de gestion assure qu'il puisse communiquer des informations diagnostiques au module de commande qui, de manière originale, comprend une unité de lecture du signal PWM circulant sur le fil de communication.

En lisant le signal PWM présent sur le fil de communication, le module de commande a accès aux informations diagnostiques qui y sont introduites par le module de gestion.

Selon une caractéristique avantageuse, l'unité d'altération du signal PWM, implémenté dans le module de gestion, possède une structure semblable à la structure de l'unité de génération du signal PWM.

Une telle implémentation d'une structure comparable à la structure de l'unité de génération du signal PWM est originale selon l'invention.

Selon une caractéristique préférentielle d'implémentation, pour signaler plusieurs événements distincts détectés dans le fonctionnement du radiateur électrique, l'unité d'altération du signal utilise une fréquence d'altération inférieure à une valeur de fréquence égale à la fraction de la fréquence sur laquelle est calé le fonctionnement de l'unité de génération du signal PWM du module de commande.

En proposant d'utiliser une fréquence inférieure pour la mise en oeuvre de l'altération, l'invention rend possible le travail simultané de l'unité de génération du signal PWM et de l'unité de génération du signal d'altération du signal PWM sur le même fil de communication. L'utilisation de deux fréquences distinctes permet de rendre possible les lectures différentes du signal PWM dans le module de commande et celui de gestion.

Avantageusement, l'unité d'altération utilise des rapports cycliques distincts pour chaque type d'événement à signaler.

Cette caractéristique assure une lecture claire du signal PWM altéré par le module de commande avec une unité de lecture du type de celle habituellement implémenté au sein du module de gestion.

Typiquement, l'unité de lecture du module de commande verra arriver un signal PWM tronqué sur un certain nombre de périodes du signal PWM tel que généré au sein de l'unité de génération du signal PWM du module de commande, et interprétera le signal tronqué sur un certain nombre de périodes en fonction du nombre de périodes de troncation afin de connaître quelle est la signification de l'altération du signal PWM.

Avantageusement, les fractions sont comprises entre 1/2 et 1/5.

De telles fractions permettent que le signal PWM reste lisible suffisamment fréquemment pour l'unité de lecture implémentée au sein du module de gestion. Cela assure que le fonctionnement du radiateur électrique ne soit pas compromis par la communication bidirectionnelle. Une telle division de la fréquence de fonctionnement de l'unité de génération du signal PWM permet le codage de cinq types d'événements détectés dans le fonctionnement du radiateur électrique ce qui représente un nombre correct et adapté à l'application.

En effet, un tel nombre de fractions, 1/2, 1/3, 1/4, 1/5, permet déjà de coder quatre évènements, ce qui généralement s'avère suffisant pour faire un retour diagnostique du radiateur électrique vers le module de commande.

Selon une caractéristique particulière, l'unité de génération d'un signal PWM implémentée dans le module de commande et/ou l'unité d'altération du signal PWM implémentée dans le module de gestion possède au moins une unité de protection contre les surintensités.

La présence d'une telle unité de protection contre les surintensités est relativement classique dès lors qu'une unité de génération d'un signal PWM est utilisée au sein d'un circuit électronique. Cela évite en particulier que des surintensités ne viennent compromettre le fonctionnement des transistors implémentés dans les unités de génération ou, selon l'invention, d'altération.

Avantageusement, le module de gestion comprend en outre une unité de réveil et d'endormissement du module de gestion en fonction du signal PWM reçu.

La présence d'une telle unité de réveil et d'endormissement du module de gestion n'est utile qu'au sein du module de gestion puisqu'il existe toujours, selon l'invention, une relation maître-esclave entre le module de commande et le module de gestion. La structure du dispositif de commande selon l'invention requiert que le module de gestion fonctionne seulement lorsque le module de commande lui en donne l'ordre, l'inverse n'étant pas vrai.

Ainsi, il est utile que le module de gestion comprenne des moyens pour que la réception d'un signal PWM non nul provoque un réveil du module de gestion et, inversement, un endormissement en l'absence de la réception d'un signal PWM en provenance du module de commande. Cela permet d'économiser de l'énergie.

L'invention concerne aussi un procédé de commande d'un radiateur électrique installé dans un système de ventilation, chauffage et/ou climatisation utilisé dans le secteur automobile, ce procédé comprenant une étape d'envoi, par un module de commande, de commandes de fonctionnement au radiateur électrique, et une étape de gestion du fonctionnement du radiateur électrique, par un module de gestion implémenté au sein de ce radiateur, en fonction des commandes reçues en provenance du module de commande.

Selon l'invention, le procédé de commande comprend en outre :
- au sein du module de commande, une étape de génération d'un signal PWM représentatif des commandes de fonctionnement à envoyer au radiateur,
- une étape d'émission du signal PWM, par le module de commande, sur un fil de communication relié au module de gestion,
- une étape de lecture, par le module de commande, du signal circulant sur le fil de communication,
- au sein du module de gestion, une étape de lecture du signal PWM circulant sur le fil de communication,
- une étape de génération d'un signal d'altération du signal PWM en fonction et en cas d'évènements détectés dans le fonctionnement du radiateur,
- une étape d'application de l'altération sur le signal PWM circulant sur le fil de communication.

Avec un tel procédé, l'invention assure la présence d'une communication bidirectionnelle entre le module de commande et le module de gestion sur un même fil de communication physiquement implémenté entre le module de gestion et le module de commande.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 montre schématiquement la structure d'un dispositif de commande d'un radiateur complémentaire selon l'invention ;
- la figure 2 montre un diagramme temporel d'un signal PWM comprenant une commande émise par un module de commande selon l'invention à destination du radiateur complémentaire selon l'invention ;
- les figures 3A, 3B et 3C montrent trois diagrammes temporels respectivement d'un signal PWM tel que produit par le module de commande, d'un signal d'altération du signal PWM introduit par le radiateur complémentaire et du signal résultant circulant entre le module de commande et le radiateur complémentaire ;
- la figure 4 montre les structures électroniques internes du module de commande et du radiateur complémentaire selon l'invention.

### Description détaillée d'un mode de réalisation

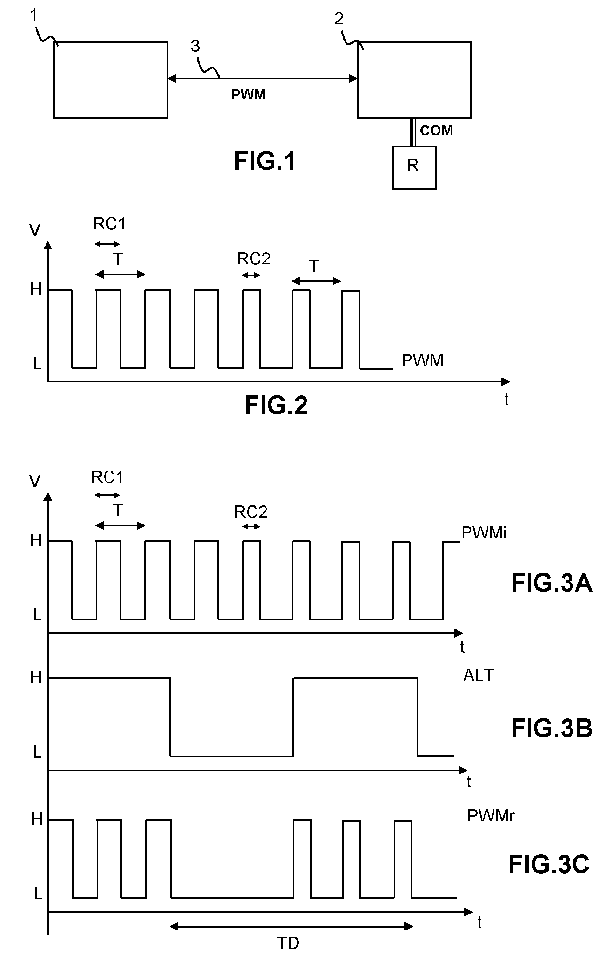

La figure 1 représente schématiquement la structure d'un dispositif de commande d'un radiateur électrique R selon l'invention. Le dispositif de commande est composé d'un module de commande 1 relié à un module de gestion 2, lui-même lié au radiateur électrique R de manière à lui envoyer des signaux de commande COM. Le module de commande 1 et le module de gestion 2 sont reliés par un fil de communication 3 unique, sur lequel circule un signal PWM.

La structure d'un tel signal PWM est montrée sur la figure 2 qui représente un diagramme temporel d'une tension V en fonction du temps t. On voit, sur cette figure, que le signal PWM est un signal périodique de période T constante. Par exemple, la fréquence du signal PWM sera de 150 Hz.

Au cours d'une période T, le signal PWM alterne entre un niveau haut, noté H, et un niveau bas, noté L. Les caractéristiques de cette alternance permettent au module de commande 1 d'informer le module de gestion 2 des consignes de fonctionnement COM à communiquer au radiateur électrique complémentaire R.

Ainsi, dans le cas de la commande d'un radiateur électrique, la puissance de fonctionnement requise est communiquée par le module de commande 1 grâce au rapport cyclique RC du signal PWM, ce rapport cyclique étant défini comme étant la durée de maintien à l'état haut H sur la période du signal PWM.

Ainsi, la variation du rapport cyclique au sein du signal PWM, par exemple de RC1 à RC2 comme illustré sur la figure 2, permet d'exprimer la valeur de puissance requise pour le fonctionnement du radiateur R. Par exemple, le rapport cyclique du signal PWM variera entre 5 et 95%, ce pourcentage se corrélant à une variation de 0 à 100% de la puissance maximale de chauffage.

Diverses conventions de fonctionnement peuvent ainsi être utilisées. Par exemple, un rapport cyclique de 5% correspondra à 100% de la puissance maximale commandée au radiateur R et un rapport cyclique de 95% correspondra à une puissance nulle commandée au radiateur.

Dans la pratique, l'augmentation ou la diminution du rapport cyclique et, donc, de la puissance de fonctionnement du radiateur est évolutive et passe par des états intermédiaires avant d'atteindre la puissance de consigne.

En parallèle de cette communication d'une puissance requise, le dispositif de commande selon l'invention prévoit qu'il soit possible, pour le module de gestion 2 du radiateur électrique R, de signaler la détection d'évènements particuliers dans le fonctionnement du radiateur électrique R.

L'invention propose d'utiliser le signal PWM, lui-même, pour faire donc un retour diagnostique sur le fonctionnement du radiateur R. Ainsi, un certain nombre de défauts pourra être signalé au module de commande 1 au travers de différentes altérations du signal PWM tel que présent sur le fil de communication 3.

Dans une réalisation illustrative, trois types de défauts, Défaut 1, Défaut 2 et Défaut 3, pourront être signalés. Par exemple, « Défaut 1 » correspond à un court-circuit ou à un circuit ouvert de un ou plusieurs circuits de chauffage. « Défaut 2 » correspond à un sous-voltage ou à un survoltage du radiateur R. Enfin, « Défaut 3 » correspond avantageusement à une température excessive.

A chacun de ces défauts est associée une mise à zéro du signal PWM, commandée par le module de gestion 2. Ces mises à zéro ont lieu pendant des durées dépendantes du défaut observé. La mise à zéro du signal PWM correspond à l'état bas L du signal.

Avantageusement le module de gestion 2 utilise une modification du rapport cyclique du signal au sein d'une fréquence inférieure à une fraction de la fréquence du signal PWM tel que généré par le module de commande 1.

Cette fraction est d'au moins le nombre de types d'événements à signifier incrémenté de 1, ici 4 donc.

La période de l'altération sera donc au moins égale à 4 fois la période du signal PWM généré par le module de commande 1.

La figure 3 présente un exemple de signification d'un événement. Sur cette figure, un signal d'altération ALT est montré. Ce signal d'altération ALT présente une période d'altération TD. Cette période TD correspond à cinq périodes T du signal PWM généré par le module de commande 1.

Ainsi, Défaut 1 sera, par exemple, associé à une mise à zéro pendant une durée égale au quart de la période d'altération, notée TD. Défaut 2 sera, par exemple, associé à une mise à zéro pendant une durée égale à la moitié de la période d'altération TD. Défaut 3 sera, par exemple, associé à une mise à zéro pendant une durée égale au tiers de la période d'altération TD.

La figure 3 représente le signalement du Défaut 2 par une mise à zéro du signal PWM sur la moitié de la période d'altération TD. Par exemple, la période d'altération dure une seconde. Le signalement du défaut dure, au sein du signal PWM jusqu'à ce que le défaut concerné disparaisse. Son signalement ne gène pas l'interprétation du signal PWM par l'unité de lecture au sein du module de gestion 2 puisqu'entre deux mises à zéro du signal PWM, le rapport cyclique du signal PWM tel que généré par le module de commande 1 reste tout à fait lisible. La figure 3A reproduit le signal PWMi tel que commandé sur le fil de communication 3 par le module de commande 1.

La figure 3B représente le signal d'altération appliqué sur le fil de communication 3 par le module de gestion 2.

La figure 3C représente le signal PWMr, résultat de l'application des deux signaux précédents, représentés sur les figures 3A et 3B, sur le fil de communication 3. Ce signal PWMr est lu de part et d'autre du fil de communication 3 par le module de commande 1 et le module de gestion 2. Chacun de ces modules est alors capable d'interpréter le signal est fonction de l'information qu'il y recherche.

Le module de commande 1 va aller trouver les informations qu'il n'a pas appliquées sur le fil de communication 3, à savoir la mise à zéro sur une pluralité de périodes du signal PWM qu'il a émis sur le fil de communication 3. Il interprétera alors cela comme un signalement d'un évènement particulier et considèrera cela comme un élément de diagnostic du fonctionnement du radiateur électrique R.

De son coté, le module de gestion 2 trouvera, sur le fil de communication 3, les informations qu'il n'a pas appliqué, à savoir le rapport cyclique du signal PWM en dehors des plages sur lesquelles ce signal est mis à zéro par ses propres soins. Le module de gestion 2 interprétera alors le signal PWMr comme signifiant la commande d'une puissance donnée en fonction du rapport cyclique observé sur les portions du signal PWMr non mises à zéro.

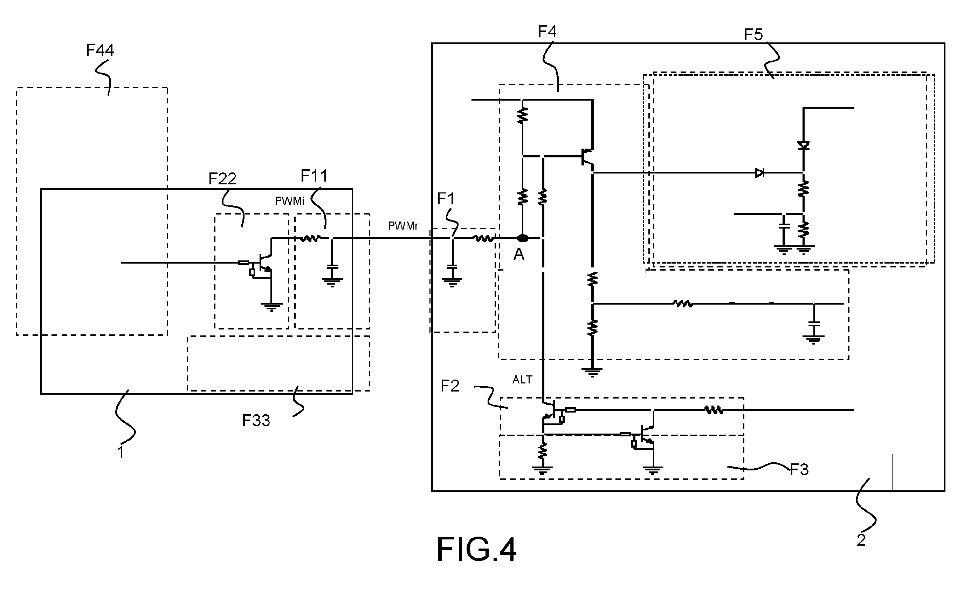

La figure 4 représente schématiquement les éléments nécessaires à la communication bidirectionnelle selon l'invention entre le module de commande 1 et le module de gestion 2, grâce à un même et unique signal PWM.

Sur cette figure, apparaîssent un certain nombre de unités fonctionnelles permettant la mise en oeuvre de l'invention. Ainsi, classiquement, le module de commande 1 comprend une unité de génération du signal PWM et d'émission de ce signal, noté F22. Dans cette unité F22, l'émission du signal PWM et sa génération sont réalisées grâce au transistor Q4.

De manière préférentielle, le module de commande 1 comprend, en outre, une unité de protection F11 de l'interface sur le fil de communication 3. Cette unité de protection F11 permet de protéger l'unité de génération et d'émission F22 du signal PWM des décharges électrostatiques et des contraintes électromagnétiques.

Avantageusement, une unité de protection F33 du groupe transistor Q4 contre les courts-circuits à la borne positive de la batterie est également présente au sein du module de commande 1. Cette unité de protection F33 n'est pas détaillé sur la figure 4 mais est semblable à l'unité de protection F3 décrit au sein du module de gestion 2.

Au sein d'un module de gestion classique de l'art antérieur, le module de gestion comprend une unité de réception F4, protégée avantageusement par un unité de protection F1 d'interface contre les décharges électrostatiques et les contraintes électromagnétiques.

L'unité de réception F4 est préférentiellement en outre reliée à une unité de réveil et d'endormissement F5. L'unité de réveil et d'endormissement F5 permet de mettre en route le fonctionnement de l'unité de réception F4 lorsqu'un signal PWM est reçu sur le fil de communication 3. Cette unité de réveil et d'endormissement F5 est utile, aussi, pour arrêter l'unité de réception F4 lorsque le radiateur électrique R est éteint en absence de signal PWM sur le fil de communication 3.

Le fonctionnement d'une communication unidirectionnelle sur un fil de communication 3 utilisant un signal PWM est tel qu'un point noté A et correspondant à l'entrée dans l'unité de réception F4 est seulement relié aux résistances R2 et R12 de l'unité de réception F4.

Selon l'invention, pour permettre la mise en oeuvre de la communication bidirectionnelle, ce point A est relié à une unité F2 de génération d'une altération du signal PWM sur le fil de communication 3. Cette unité d'altération F2 est originale selon l'invention. Il comprend un transistor Q1, dont le fonctionnement en ouverture et fermeture permet au module de gestion 2 d'altérer le signal PWM de manière signifiante pour le module de commande 1.

Ainsi, dans le cas où le transistor Q1 est ouvert, au sein du module de gestion 2 du radiateur électrique R, le module de gestion 2 se comporte comme un module de gestion de l'art antérieur et une communication unidirectionnelle est alors uniquement possible.

Selon l'invention, dans le cas où le module de gestion 2 doit, pour des visées diagnostiques, envoyer des informations vers le module de commande 1, le transistor Q1 est utilisé en fermeture, sur une portion d'une période bien particulière d'altération TD. La fermeture du transistor Q1 altère le signal PWM de manière à ce que le signal résultant PWMr, circulant sur le fil de communication 3, soit également susceptible d'être interprété par le module de commande 1 pour connaître l'état du radiateur électrique R.

Ainsi, selon l'invention, la fermeture du transistor Q1 amène le signal PWM à l'état bas, assurant ainsi une possibilité d'envoi d'information du module de gestion 2 vers le module de commande 1.

La fréquence d'activation du transistor Q1 doit pratiquement être substantiellement inférieure à la fréquence d'activation du transistor Q4 du module de commande 1.

Aussi, pour parvenir à interpréter le signal PWMr circulant sur le fil de communication 3, le module de commande 1 doit comprendre une unité de lecture, noté F44, comprenant des éléments similaires à ceux présentés dans l'unité de réception F4. Cette unité de lecture originale permet au module de commande 1 de connaître le signal PWMr tel qu'il circule réellement sur le fil de communication 3 et non pas seulement de connaître le signal qu'il a lui-même généré sur le fil de communication 3.

Avantageusement, l'unité d'altération F2 est protégée de manière similaire à l'unité de génération du signal PWM F22 par une unité de protection F3 contre les courts-circuits à la borne positive de la batterie. Selon la structure de l'unité de protection F3, un transistor Q2 protège le transistor Q1 en cas de court-circuit du fil de communication 3 à la borne positive de la batterie. En effet, dans ce cas, une grande intensité circulant dans la résistance R7 engendre la fermeture du transistor Q1 sous l'action du transistor Q2. Cela protège le transistor Q1.

La présence de l'unité F5 de réveil et d'endormissement est nécessaire pour assurer un mode de basse consommation pour le radiateur électrique R, dès lors qu'il n'y a pas d'activité sur le fil de communication 3. En effet, une absence d'état bas sur la ligne de communication 3 implique, au sein du bloc fonctionnel de lecture F4, qu'un transistor Q3 soit tout le temps ouvert.

Cela implique qu'une capacité C4, présente dans l'unité de réveil et d'endormissement F5, n'est pas chargée au travers de KL15. Avantageusement, un logiciel est présent au sein du module de gestion 2 pour permettre de décider de mettre le signal PWM à zéro, grâce à l'action du transistor Q1.

Dans le cas où le signal PWN a alors été mise à zéro, il n'y a plus moyen de charger le transistor Q4 par un quelconque moyen. Ainsi, la capacité C4 achève une décharge complète. La tension, notée REG_EN, aux bornes de la capacité est alors à un niveau bas. Ainsi, aucune consommation d'énergie n'a lieu dans le module de gestion 2 et dans le radiateur électrique complémentaire R.

Afin de permettre de réveiller le module de gestion 2 avec une activité sur la ligne de communication 3, la constante de temps de charge de la capacité C4 est bien plus faible que la constante de temps de décharge de la capacité C4. Ainsi, un rapport cyclique faible est apte à réveiller le module de gestion 2. En effet, un état bas sur la ligne de communication résulte dans la charge de la capacité C4.

Ensuite, avantageusement, un logiciel implémenté au sein du module de gestion 2 assure l'état de réveil en chargeant la capacité C4 au travers d'un autre chemin, par lequel la capacité C4 est alimentée par un microprocesseur présent au sein du module de gestion 2. Sur la figure 4, une alimentation PWM-EN indépendante et contrôlée par le microprocesseur est alors utilisée.

On remarque enfin que diverses mises en oeuvre peuvent être réalisées selon les principes de l'invention.

## Revendications

1. Dispositif de commande d'un radiateur électrique complémentaire (R) installé dans un système de ventilation utilisé dans le secteur automobile, ce dispositif comprenant au moins deux modules électroniques incluant chacun un calculateur, un module de commande (1) apte à envoyer des commandes de fonctionnement au radiateur et un module de gestion (2), implémenté au sein du radiateur électrique (R) pour en gérer son fonctionnement en fonction des commandes reçues en provenance du module de commande (1),
**caractérisé en ce que** le module de commande (1) comprend une unité de génération et d'émission (F22) d'un signal PWM représentatif des commandes de fonctionnement à envoyer au radiateur (R) sur un unique fil de communication (3) relié au module de gestion (2) et une unité de lecture (F44) du signal circulant sur le fil de communication (3), le module de gestion (2) comprend une unité d'altération (F2) du signal PWM circulant sur le fil de communication (3) en fonction d'événements détectés dans le fonctionnement du radiateur (R).

2. Dispositif selon la revendication 1, **caractérisé en ce que** l'unité d'altération (F2) du signal PWM implémentée dans le module de gestion (2) possède une structure semblable à la structure de l'unité de génération (F22) du signal PWM.

3. Dispositif selon l'une des revendications 1 et 2, **caractérisé en ce que**, pour signaler plusieurs types d'événements distincts détectés dans le fonctionnement du radiateur (R), l'unité d'altération (F2) du signal utilise une fréquence d'altération inférieure à une valeur de fréquence égale à la fraction de la fréquence sur laquelle est calé le fonctionnement de l'unité de génération (F22) du signal PWM du module de commande (1).

4. Dispositif selon la revendication 3, **caractérisé en ce que** l'unité d'altération utilise des rapports cycliques distincts pour chaque type d'événement à signaler.

5. Dispositif selon l'une des revendications 3 et 4, **caractérisé en ce que** les fractions sont comprises entre 1/2 et 1/5.

6. Dispositif selon l'une des revendications précédentes, **caractérisé en ce que** l'unité de génération (F22) d'un signal PWM implémentée dans le module de commande (1) et/ou l'unité d'altération (F2) du signal PWM implémentée dans le module de gestion (2) possède(nt) au moins une unité de protection contre les surintensités (F11,F33,F1,F3).

7. Dispositif selon l'une des revendications précédentes, **caractérisé en ce que** le module de gestion (2) comprend en outre une unité de réveil et d'endormissement (F5) du module de gestion (2) en fonction du signal PWM reçu.

8. Procédé de commande d'un radiateur électrique complémentaire (R) installé dans un système de ventilation utilisé dans le secteur automobile, ce procédé comprenant une étape d'envoi, par un module de commande (1), de commandes de fonctionnement au radiateur (R) et une étape de gestion du fonctionnement du radiateur (R), par un module de gestion (2) implémenté au sein de ce radiateur (R), en fonction des commandes reçues en provenance du module de commande (1), **caractérisé en ce que**, le procédé de commande comprend en outre :
- au sein du module de commande (1), une étape de génération d'un signal PWM (PWMi) représentatif des commandes de fonctionnement à envoyer au radiateur (R),
- une étape d'émission du signal PWM, par le module de commande (1), sur un fil de communication (3) relié au module de gestion (2),
- une étape de lecture, par le module de commande (1), du signal (PWMr) circulant sur le fil de communication (3),
- au sein du module de gestion (2), une étape de lecture du signal (PWMr) circulant sur le fil de communication (3),
- une étape de génération d'un signal d'altération (ALT) du signal PWM en fonction et en cas d'événements détectés dans le fonctionnement du radiateur (R),
- une étape d'application de l'altération (ALT) sur le signal PWM circulant sur le fil de communication (3).

## Patentansprüche

1. Steuervorrichtung für einen zusätzlichen elektrischen Kühler (R), der in einem Belüftungssystem installiert ist, das auf dem Kraftfahrzeugsektor verwendet wird, wobei diese Vorrichtung enthält wenigstens zwei elektronische Module umfasst, die jeweils enthalten: einen Rechner, ein Befehlsmodul (1), das an den Kühler Betriebsbefehle schicken kann, und ein Steuermodul (2), das in dem elektrischen Kühler (R) implementiert ist, um dort dessen Funktionsweise als Funktion der Befehle, die von dem Befehlsmodul (1) empfangen werden, zu steuern,
**dadurch gekennzeichnet, dass** das Befehlsmodul (1) eine Einheit (F22) zum Erzeugen und Senden eines PWM-Signals, das Betriebsbefehle repräsentiert, die auf einer einzigen Kommunikationsleitung (3), die mit dem Steuermodul (2) verbunden ist, zu dem Kühler (R) zu schicken sind, und eine Einheit (F44) zum Lesen des auf der Kommunikationsleitung (3) laufenden Signals umfasst, wobei das Steuermodul (2) eine Einheit (F2) zum Verändern des auf der Kommunikationsleitung (3) laufenden PWM-Signals als Funktion von Ereignissen, die im Betrieb des Kühlers (R) detektiert werden, umfasst.

2. Vorrichtung nach Anspruch 1, **dadurch gekennzeichnet, dass** die Einheit (F2) zum Verändern des PWM-Signals, die in dem Steuermodul (2) implementiert ist, eine Struktur besitzt, die zu der Struktur der Einheit (F22) zum Erzeugen des PWM-Signals ähnlich ist.

3. Vorrichtung nach einem der Ansprüche 1 und 2, **dadurch gekennzeichnet, dass** die Einheit (F2) zum Verändern des Signals, um mehrere verschiedene Typen von Ereignissen, die im Betrieb des Kühlers (R) detektiert werden, zu melden, eine Änderungsfrequenz verwendet, die niedriger als ein Frequenzwert ist, der gleich dem Bruchteil der Frequenz ist, auf die der Betrieb der Einheit (F22) zum Erzeugen des PWM-Signals des Befehlsmoduls (1) eingestellt ist.

4. Vorrichtung nach Anspruch 3, **dadurch gekennzeichnet, dass** die Veränderungseinheit verschiedene Tastgrade für jeden zu meldenden Ereignistyp verwendet.

5. Vorrichtung nach einem der Ansprüche 3 und 4, **dadurch gekennzeichnet, dass** die Bruchteile im Bereich von 1/2 bis 1/5 liegen.

6. Vorrichtung nach einem der vorhergehenden Ansprüche, **dadurch gekennzeichnet, dass** die Einheit (F22) zum Erzeugen des PWM-Signals, die in dem Befehlsmodul (1) implementiert ist, und/oder die Einheit (F2) zum Verändern des PWM-Signals, die in dem Steuermodul (2) implementiert ist, wenigstens eine Einheit (F11, F33, F1, F3) zum Schutz gegen Überströme besitzen.

7. Vorrichtung nach einem der vorhergehenden Ansprüche, **dadurch gekennzeichnet, dass** das Steuermodul (2) außerdem eine Einheit (F5) umfasst, um das Steuermodul (2) als Funktion des empfangenen PWM-Signals in den Wachzustand und in den Ruhezustand zu versetzen.

8. Verfahren zum Steuern eines zusätzlichen elektrischen Kühlers (R), der in einem Belüftungssystem installiert ist, das auf dem Kraftfahrzeugsektor verwendet wird, wobei dieses Verfahren einen Schritt des Schickens von Betriebsbefehlen zu dem Kühler (R) durch ein Befehlsmodul (1) und einen Schritt des Steuerns des Betriebs des Kühlers (R) durch ein Steuermodul (2), das in diesem Kühler (R) implementiert ist, als Funktion von Befehlen, die von dem Befehlsmodul (1) stammen, umfasst, **dadurch gekennzeichnet, dass** das Steuerverfahren außerdem Folgendes umfasst:
- in dem Befehlsmodul (1) einen Schritt zum Erzeugen eines PWM-Signals (PWMi), das zu dem Kühler (R) zu schickende Betriebsbefehle repräsentiert,
- einen Schritt des Sendens des PWM-Signals durch das Befehlsmodul (1) auf einer Kommunikationsleitung (3), der mit dem Steuermodul (2) verbunden ist,
- einen Schritt des Lesens durch das Befehlsmodul (1) des auf der Kommunikationsleitung (3) laufenden Signals (PWMr),
- in dem Steuermodul (2) einen Schritt des Lesens des Signals (PWMr), das auf der Kommunikationsleitung (3) läuft,
- einen Schritt des Erzeugens eines Signals (ALT) zum Verändern des PWM-Signals als Funktion und im Fall von Ereignissen, die im Betrieb des Kühlers (R) detektiert werden,
- einen Schritt des Anwendens der Veränderung (ALT) auf das PWM-Signal, das auf der Kommunikationsleitung (3) läuft.

## Claims

1. Device for controlling a complementary electric radiator (R) installed in a ventilation system used in the automobile sector, this device comprising at least two electronic modules each including a computer, a control module (1) suitable for sending operating commands to the radiator and a management module (2), implemented within the electric radiator (R) to manage its operation according to the commands received from the control module (1),
**characterized in that** the control module (1) comprises a unit (F22) for generating and transmitting a PWM signal representative of the operating commands to be sent to the radiator (R) over a single communication wire (3) linked to the management module (2) and a unit (F44) for reading the signal circulating on the communication wire (3), and the management module (2) comprises a unit (F2) for altering the PWM signal circulating on the communication wire (3) according to events detected in the operation of the radiator (R).

2. Device according to Claim 1, **characterized in that** the unit (F2) for altering the PWM signal implemented in the management module (2) has a structure similar to the structure of the unit (F22) for generating the PWM signal.

3. Device according to either of Claims 1 and 2, **characterized in that**, to signal a plurality of types of distinct events detected in the operation of the radiator (R), the unit (F2) for altering the signal uses an alteration frequency below a frequency value equal to the fraction of the frequency on which the operation of the unit (F22) for generating the PWM signal of the control module (1) is aligned.

4. Device according to Claim 3, **characterized in that** the alteration unit uses distinct duty cycles for each type of event to be signaled.

5. Device according to either of Claims 3 and 4, **characterized in that** the fractions are between 1/2 and 1/5.

6. Device according to one of the preceding claims, **characterized in that** the unit (F22) for generating a PWM signal implemented in the control module (1) and/or the unit (F2) for altering the PWM signal implemented in the management module (2) has/have at least one overcurrent protection unit (F11, F33, F1, F3).

7. Device according to one of the preceding claims, **characterized in that** the management module (2) also comprises a unit (F5) for reactivating and deactivating the management module (2) according to the PWM signal received.

8. Method for controlling a complementary electric radiator (R) installed in a ventilation system used in the automobile sector, this method comprising a step of sending, via a control module (1), operating commands to the radiator (R) and a step of managing the operation of the radiator (R), via a management module (2) implemented within this radiator (R), according to the commands received from the control module (1), **characterized in that** the control method also comprises:
- within the control module (1), a step of generation of a PWM signal (PWMi) representative of the operating commands to be sent to the radiator (R),
- a step of transmission of the PWM signal, by the control module (1), over a communication wire (3) linked to the management module (2),
- a step of reading, by the control module (1), the signal (PWMr) circulating on the communication wire (3),
- within the management module (2), a step of reading the signal (PWMr) circulating on the communication wire (3),
- a step of generation of an alteration signal (ALT) to alter the PWM signal according to, and in case of, events detected in the operation of the radiator (R),
- a step of application of the alteration (ALT) to the PWM signal circulating on the communication wire (3).
